# EUROPÄISCHE PATENTSCHRIFT

(11) **EP 2 694 178 B1**
(45) Veröffentlichungstag und Bekanntmachung des Hinweises auf die Patenterteilung: **10.06.2015**
(21) Anmeldenummer: 12721426.0
(22) Anmeldetag: 02.04.2012
(51) Int. Cl.: B01D 5/00, F28B 1/02

(54) **VORRICHTUNG UND VERFAHREN ZUR KONDENSATION VON DAMPF IN EINEM BEHÄLTER**
DEVICE AND METHOD FOR CONDENSING STEAM IN A VESSEL
DISPOSITIF ET PROCÉDÉ DE CONDENSATION DE VAPEUR DANS UN RÉCIPIENT

(30) Priorität: 07.04.2011 EP 11161476
(43) Veröffentlichungstag der Anmeldung: 12.02.2014
(73) Patentinhaber: BASF SE, 67056 Ludwigshafen (DE)
(72) Erfinder: KIRCHNER, Günther, 67227 Frankenthal (DE); MAURER, Markus, 67071 Ludwigshafen (DE)
(86) Internationale Anmeldenummer: PCT/EP2012/055923
(87) Internationale Veröffentlichungsnummer: WO 2012/136609

(56) Entgegenhaltungen:
- DE-A1- 4 300 131
- DE-A1- 19 830 163
- DE-A1-102007 031 766
- DE-C1- 19 712 148
- US-A- 2 617 758

## Beschreibung

Die vorliegende Erfindung betrifft eine Vorrichtung zur Kondensation von Dampf in einem Behälter umfassend einen Dampfraum und einen Kondensationsraum, die in horizontaler Richtung benachbart sind, wobei der Dampfraum mit einer horizontalen offenen Querschnittsfläche nach unten offen ist, der Kondensationsraum nach unten durch mindestens ein Bodenelement verschlossen ist, und in dem Kondensationsraum mindestens ein Bündel von Wärmetauscherelementen im Wesentlichen vertikal ausgerichtet angeordnet ist. Ferner betrifft die Erfindung eine Kolonne, bei der eine erfindungsgemäße Vorrichtung als Kopfkondensator im Kopf der Kolonne angeordnet ist. Weiterhin betrifft die vorliegende Erfindung ein Verfahren zur Kondensation eines Dampfstroms mittels einer erfindungsgemäßen Vorrichtung.

In der thermischen Trenntechnik sind seit langem Vorrichtungen und Verfahren zur Kondensation von Dampf, der in einer Kolonne aufsteigt, bekannt. Derartige Vorrichtungen werden auch als Kondensatoren bezeichnet. So sind beispielsweise aus dem Lehrbuch "Destillier- und Rektifiziertechnik" von E. Kirschbaum, 4. Auflage, Springer Verlag (1969) Kondensatoren bekannt, die als eigenständige Vorrichtungen außerhalb der Kolonne angebracht sind (S. 157-158), Kondensatoren, die direkt auf den Kolonnenkopf aufgesetzt sind (S. 472-473), sowie Kondensatoren, die in den Kolonnenkopf integriert sind (S. 410). Diese Vorrichtungen erfüllen die Aufgabe, in der Kolonne aufsteigenden Dampf teilweise oder komplett zu kondensieren. Die entstehende Flüssigkeit wird üblicherweise aufgefangen und ganz oder zum Teil in die Kolonne zurückgeführt und/oder ganz oder zum Teil als Kopfabzugsstrom aus dem Trennprozess abgezogen.

Für die konkrete Ausgestaltung von Kondensatoren sind vielfältige Konzepte und Varianten bekannt, beispielsweise im Hinblick auf die Art der Wärmetauscherelemente wie Plattenwärmetauscher oder Rohrbündelwärmetauscher, oder hinsichtlich der Stromführung von zu kondensierendem Dampf und Wärmeträgermedium. Bei der Kondensation in einem Rohrbündelwärmetauscher beispielsweise kann das Rohrbündel horizontal oder vertikal angeordnet sein, und der zu kondensierende Dampf kann in den Rohren oder um die Rohre geführt werden. Wird der zu kondensierende Dampf um die Rohre geführt, so kann er entlang der Rohre oder quer zu den Rohren durch das Bündel geleitet werden.

Vorrichtungen zur Kondensation von Dampf, die in einer Kolonne integriert sind, bieten unter anderem den Vorteil, dass auf eine Dampfleitung von der Kolonne zum Kondensator verzichtet werden kann und im Allgemeinen weniger Bauraum benötigt wird als bei einer Aufstellung des Kondensators außerhalb der Kolonne.

Eine Variante eines derartigen in die Kolonne integrierten Kondensators beschreibt die deutsche Patentschrift DE 197 12 148 C1. Im Kopf der Kolonne ist ein nach oben offenes Gehäuse aus Blechen vorgesehen, das einen Raum abgrenzt, in dem ein Bündel aus Plattenwärmetauschern angebracht ist. Nach unten wird das Gehäuse durch einen Gehäuseboden abgeschlossen, der als schräg zur Kolonnenwand verlaufendes Bodenblech ausgebildet ist. Aus der Kolonne aufsteigender Dampf wird durch die Wölbung des Kolonnendeckels umgeleitet, tritt, von oben in das Gehäuse ein und strömt nach unten entlang der Wärmetauscherplatten. Das sich bildende Kondensat tropft von den Wärmetauscherplatten nach unten ab und wird von dem Gehäuseboden aufgefangen. Durch die schräge Anordnung des Gehäusebodens sammelt sich das Kondensat an der Kolonnenwand als tiefster Stelle und wird durch eine Öffnung in der Kolonnenwand abgezogen. Die Wärmetauscherplatten werden im Gegenstrom mit einem Kühlmedium von unten nach oben durchströmt. Dazu sind ein Einlass und ein Auslass für das Kühlmedium in der Kolonnenwand vorgesehen. Um zu verhindern, dass Kondensat durch aufsteigenden heißen Dampf teilweise wieder verdampft wird, ist der Gehäuseboden Wärme isolierend ausgeführt.

Die deutsche Offenlegungsschrift DE 198 30 163 A1 beschreibt ein ähnliches Konzept eines in den Kolonnenkopf integrierten Kondensators. Es ist ein Gehäuse aus Blechen vorgesehen, in dem ein Bündel aus Plattenwärmetauschern angebracht ist. Der in der Kolonne aufsteigende Dampf strömt von oben nach unten parallel zu den Wärmetauscherplatten. Das entstehende Kondensat tropft auf den schräg angeordneten Gehäuseboden und wird an der tiefsten Stelle durch eine Öffnung in der Kolonnenwand entnommen. Im Gegensatz zu der oben zitierten Patentschrift ist das Bündel in diesem Fall nicht fest mit der Kolonnenwand verbunden, sondern auswechselbar am Kolonnendeckel befestigt. Die Anschlüsse für das Kühlmedium befinden sich ebenfalls im Kolonnendeckel. Das Wärmetauscherbündel kann durch Öffnen des Kolonnendeckels entnommen werden, beispielsweise zu Reinigungszwecken.

Den oben beschriebenen Vorrichtungen ist gemein, dass aus der Kolonne aufsteigender Dampf am Kolonnenkopf umgelenkt wird und von oben nach unten durch das Bündel von Plattenwärmetauschern strömt. Dies bedingt einen Druckverlust, der im Allgemeinen unerwünscht ist und insbesondere bei Anwendungen im Hochvakuum dieser Art von Kondensatoren Grenzen setzt. US 2617758 offenbart eine Vorrichtung wobei Dämpfe mehrmals mittels Umlenkelementen um ein Rohrbündel geleitet werden.

Es stellte sich die Aufgabe, eine Vorrichtung und ein Verfahren zur Kondensation von Dampf bereitzustellen, die den Anwendungsbereich hinsichtlich der Betriebsbedingungen erweitern, wobei die Vorteile der Integration in einem Behälter, beispielsweise einer Kolonne, beibehalten werden.

Diese Aufgabe wird erfindungsgemäß gelöst durch eine Vorrichtung zur Kondensation von Dampf gemäß Anspruch 1. Ferner wird die Aufgabe gelöst durch eine Kolonne gemäß Anspruch 11, in die eine erfindungsgemäße Vorrichtung integriert ist. Weiterhin wird die Aufgabe gelöst durch Verfahren zur Kondensation eines Dampfstroms gemäß den Ansprüchen 14 und 15. Vorteilhafte Ausgestaltungen und Weiterbildungen der Erfindung sind in den jeweils abhängigen Ansprüchen 2 bis 10 sowie 12 und 13 angegeben.

Eine erfindungsgemäße Vorrichtung zur Kondensation von Dampf in einem Behälter umfasst einen Dampfraum und einen Kondensationsraum, die in horizontaler Richtung benachbart sind, wobei der Dampfraum mit einer horizontalen offenen Querschnittsfläche nach unten offen ist, der Kondensationsraum nach unten durch mindestens ein Bodenelement verschlossen ist, und in dem Kondensationsraum mindestens ein Bündel von Wärmetauscherelementen im Wesentlichen vertikal ausgerichtet angeordnet ist. Zwischen Dampfraum und Kondensationsraum sind Wandelemente vorhanden, die die beiden Räume teilweise voneinander trennen und eine vertikale Übertrittsfläche vom Dampfraum in den Kondensationsraum definieren. Ferner ist im Dampfraum mindestens ein Umlenkelement vorhanden zur Umlenkung des von unten in den Dampfraum aufsteigenden Dampfes in Richtung der Übertrittsfläche, das aufgrund seiner Formgebung eine im Wesentlichen horizontale Dampfströmung durch die Übertrittsfläche auf die Wärmetauscherelemente bedingt.

Unter einem Behälter wird hier und im Folgenden ein Gebilde verstanden, das in seinem Inneren einen Hohlraum aufweist, in dem sich der Dampfraum und der Kondensationsraum befinden. In einer bevorzugten Ausführungsform der Erfindung handelt es sich bei dem Behälter um ein Gebilde, das in horizontaler Richtung durch eine zusammenhängende Wand sowie nach unten durch einen Boden und nach oben durch einen Deckelbegrenzt ist. Ein derartiger Behälter weist mindestens einen Dampfeinlass auf, durch den Dampf in das Innere des Behälters strömen kann. Bevorzugt befindet sich ein derartiger Dampfeinlass am unteren Ende des Behälters. Er kann beispielsweise in Form eines Stutzens oder Flansches realisiert sein.

In einer weiteren bevorzugten Ausführungsform ist der Behälter ein integraler Bestandteil eines größeren Gebildes, beispielsweise ein Abschnitt einer Kolonne. Besonders bevorzugt wird der Behälter durch den Kopf einer Kolonne gebildet, der seitlich durch die Kolonnenwand begrenzt ist. Nach oben kann der Behälter durch den Kolonnendeckel begrenzt sein, während er nach unten offen ist, sodass in der Kolonne aufsteigender Dampf von unten in den Behälter gelangen kann.

Zwischen Dampfraum und Kondensationsraum sind in dem Behälter Wandelemente vorhanden, die die beiden Räume teilweise voneinander trennen. Sie sind derart angeordnet, dass sie eine im Wesentlichen vertikal ausgerichtete Fläche zwischen Dampfraum und Kondensationsraum offen lassen, die im Folgenden als vertikale Übertrittsfläche bezeichnet wird. Bevorzugt sind die Wandelemente dichtend mit der Behälterwand verbunden und ragen von der jeweiligen Behälterwand nach innen. Dadurch wird sichergestellt, dass der Dampf nur durch die vertikale Übertrittsfläche vom Dampfraüm in den Kondensationsraum gelangen kann und Bypassströme vermieden werden.

Während der Dampfraum nach unten offen ist, ist der Kondensationsraum nach unten durch mindestens ein Bodenelement verschlossen, das im Folgenden auch als das erste Bodenelement bezeichnet wird. Das erste Bodenelement ist derart gestaltet und mit der Behälterwand sowie den Wandelementen dichtend verbunden, dass es den Kondensationsraum nach unten begrenzt und ein Eindringen von Dampf von unten verhindert. Bevorzugt ist das erste Bodenelement zumindest teilweise unterhalb des mindestens einen Bündels von Wärmetauscherelementen angeordnet, sodass an diesem Bündel entstehendes Kondensat von dem ersten Bodenelement auffangbar ist. Aufgrund seiner Formgebung alleine oder gemeinsam mit einem Teil der Behälterwand und/oder der Wandelemente bildet das erste Bodenelement einen ersten Sammelraum für das Kondensat. Besonders bevorzugt ist das Bodenelement ausgehend von dem Ort, oberhalb dessen sich das Bündel von Wärmetauscherelementen befindet, nach unten zur Behälterwand hin geneigt. Dadurch wird eine einfache Entnahme des sich auf dem Bodenelement sammelnden Kondensats ermöglicht, z.B. durch eine Öffnung in der Behälterwand an der tiefsten Stelle des Bodenelements. Das Bodenelement kann jedoch auch anderweitig gestaltet sein, beispielsweise im Wesentlichen horizontal mit einem konischen Ablaufbereich, aus dem das gesammelte Kondensat über eine Rohrleitung entnommen werden kann. In einer weiteren bevorzugten Ausführungsform ist das Bodenelement als Doppelblech mit einer Isolierschicht ausgeführt. Dadurch wird eine übermäßige Erwärmung des Bodenelements auf der Innenseite des Kondensationsraum und somit eine Verdampfung bereits gebildeten Kondensats vermieden. In einer Ausführungsform ist die Isolierschicht durch ein in dem Bodenelement eingeschlossenes Gasvolumen realisiert, besonders bevorzugt handelt es sich bei dem Gas um Luft. Im Falle eines Gasvolumens als Isolierschicht weist die Unterseite des Bodenelements vorzugsweise eine Bohrung auf, über die das Gasvolumen mit der Umgebung in Verbindung steht. In einer weiteren Ausführungsform umfasst die Isolierschicht ein festes Isoliermaterial, beispielsweise einen beständigen Kunststoff oder Glaswolle.

Nach oben kann der Kondensationsraum offen oder begrenzt sein. In einer erfindungsgemäßen Ausgestaltung weist der Behälter einen Deckel oder eine obere Wandung auf, der oder die die obere Begrenzung des Kondensationsraumes bildet. Die Wandelemente reichen in diesem Fall soweit nach oben, dass der Dampf aus dem Dampfraum nicht um die Wandelemente herum in den Kondensationsraum gelangen kann, sondern durch die vertikale Übertrittsfläche strömen muss. In einer weiteren Ausgestaltung ist die erfindungsgemäße Vorrichtung in einem Bereich des Behälters eingesetzt, der keine baulich bedingte obere Begrenzung aufweist. In diesem Fall ist der Kondensationsraum vorzugsweise nach oben offen, während der Dampfraum nach oben begrenzt ist. Diese obere Begrenzung des Dampfraumes wird bevorzugt durch ein Abdeckelement realisiert, das analog zum Bodenelement mit der Behälterwand und den Wandelementen derart dichtend verbunden ist, dass kein Dampf nach oben aus dem Dampfraum entweichen kann, sondern durch die vertikale Übertrittsfläche in den Kondensationsraum strömt.

Erfindungsgemäß ist in dem Kondensationsraum mindestens ein Bündel von Wärmetauscherelementen angeordnet, das im Wesentlichen vertikal ausgerichtet ist. Darunter ist zu verstehen, dass die Ausdehnung des Bündels in vertikaler Richtung größer ist als in jede horizontale Richtung. Das Bündel kann dabei gegenüber der Längsachse des Behälters auch geringfügig geneigt sein, wobei ein Neigungswinkel von -20° bis +20° noch als geringfügig angesehen wird. Bevorzugt ist das Bündel von Wärmetauscherelementen im Querschnitt betrachtet in einem mittleren Bereich des Behälters angeordnet, wobei unter dem mittleren Bereich ein zum Behälterquerschnitt konzentrischer Kreis verstanden wird, dessen Durchmesser vorzugsweise höchstens 80%, besonders bevorzugt höchstens 60% des Behälterdurchmessers beträgt.

In einer bevorzugten Ausgestaltung der erfindungsgemäßen Vorrichtung ist das mindestens eine Bündel von Wärmetauscherelementen im Kondensationsraum unmittelbar an der vertikalen Übertrittsfläche angeordnet, sodass aus dem Dampfraum in den Kondensationsraum übertretender Dampf direkt auf die Wärmetauscherelemente gelangt.

Als Dampfraum wird der Raum in dem Behälter bezeichnet, der horizontal dem Kondensationsraum benachbart ist. Er ist nach unten offen und beginnt in Höhe des Bodenelements des Kondensationsraumes. Ein Querschnitt durch den Behälter an dieser Stelle ergibt zum einen eine Fläche, die durch den Kondensationsraum beansprucht wird und die für von unten aufsteigenden Dampf undurchlässig ist, und andererseits eine Fläche, die den Eintritt in den Dampfraum darstellt und durch die der Dampf nach oben strömen kann. Letztere Fläche wird im Folgenden auch als horizontale offene Querschnittsfläche bezeichnet. Seitlich wird der Dampfraum durch die Behälterwand sowie die Wandelemente und die vertikale Übertrittsfläche begrenzt.

Erfindungsgemäß ist im Dampfraum mindestens ein Umlenkelement angebracht, das so gestaltet ist, dass von unten in den Dampfraum aufsteigender Dampf in Richtung der Wärmetauscherelemente umgelenkt wird, und der Dampf beim Übertritt vom Dampfraum in den Kondensationsraum im Wesentlichen horizontal gerichtet auf das Bündel von Wärmetauscherelementen geleitete wird. Diese Art der Anströmung wird in der Wärmeübertragungsfechnik auch als "x-Flow" bezeichnet. Im Gegensatz zu aus dem Stand der Technik bekannten Konzepten, bei denen der Dampfstrom um ca. 180° umgelenkt wird, erfolgt erfindungsgemäß eine Umleitung des Dampfstroms um lediglich etwa 90°. Dadurch wird der Druckverlust, der mit der Umlenkung verbunden ist, deutlich reduziert.

In einer vorteilhaften Ausprägung der Erfindung ist das mindestens eine Umlenkelement als Blech ausgebildet mit einem unteren Bereich, einem oberen Bereich und einem Übergangsbereich zwischen dem unteren und oberen Bereich. Der untere Bereich verläuft im Wesentlichen vertikal und parallel zu dem Wärmetauscherbündel, wohingegen der obere Bereich im Wesentlichen horizontal verläuft. Bevorzugt reicht das Umlenkelement möglichst nahe an das Bündel heran, wobei letzteres jedoch noch problemlos ohne Beeinträchtigung durch das mindestens eine Umlenkelement ausgetauscht werden können soll. Ein Abstand von 1 bis 2 cm zwischen dem Ende des mindestens einen Umlenkelements und dem Wärmetauscherbündel hat sich in dieser Hinsicht bewährt. Der Übergangsbereich verbindet den unteren und den oberen Bereich über eine Rundung, die beispielsweise als Viertelkreis oder Viertelellipse ausgeführt sein kann.

Das mindestens eine Umlenkelement kann aus unterschiedlichen Materialien gefertigt sein, beispielsweise einem Metall oder einem harten Kunststoff wie Polyamid. Bevorzugt ist es aus Metall, insbesondere Stahl, gefertigt. Die Materialstärke wird durch die Festigkeitskennwerte des verwendeten Materials festgelegt. Bevorzugt wird das Umlenkelement bzw. werden die Umlenkelemente mit der Behälterwand verschweißt. In Abhängigkeit der konkreten Gegebenheiten und der Materialauswahl kommen auch andere Befestigungsmaßnahmen in Frage wie Kleben, Verschrauben oder Klippverbindungen.

Der Dampfraum ist vorzugsweise nach oben begrenzt. In einer erfindungsgemäßen Ausgestaltung weist der Behälter einen Deckel oder eine obere Wandung auf, der oder die die obere Begrenzung des Dampfraumes bildet. Häufig weist der Deckel eine Rundung auf, sodass aufsteigender Dampf ohne nennenswerte Verwirbelungen und Widerstände von der Behälterwand in Richtung der vertikalen Übertrittsfläche gelenkt wird. Unterstützend oder in Fällen, in denen Widerstände wie Ecken und Kanten im Strömungsverlauf vorhanden sind, können Leitelemente, beispielsweise gerundete Leitbleche, im Übergangsbereich von Behälterwand zum Behälterdeckel vorgesehen sein, die für eine Dampfströmung sorgen, die möglichst frei von Verwirbelungen ist. In einer weiteren Ausgestaltung ist die erfindungsgemäße Vorrichtung in einem Bereich des Behälters eingesetzt, der keine baulich bedingte obere Begrenzung aufweist. In diesem Fall wird die obere Begrenzung bevorzugt durch ein Abdeckelement realisiert, das mit der Behälterwand derart dichtend verbunden ist, dass kein Dampf nach oben entweichen kann, abgesehen von einer geringen Menge an Dampf, die gegebenenfalls durch den Spalt zwischen dem Ende des Abdeckelements und dem Bündel von Wärmetauscherelementen strömen kann. Besonders bevorzugt ist das Abdeckelement als Umlenkelement gestaltet, das aufgrund seiner Formgebung für eine Dampfströmung sorgt, die möglichst frei von Verwirbelungen ist.

In einer bevorzugten Ausgestaltung der erfindungsgemäßen Vorrichtung sind im Dampfraum mindestens zwei Umlenkelemente vorhanden und so angeordnet, dass sie die horizontale offene Querschnittsfläche beim Eintritt in den Dampfraum in mindestens drei Eintrittsflächen aufteilen, und die vertikale Übertrittsfläche vom Dampfraum in den Kondensationsraum in mindestens drei Austrittsflächen aufteilen, wobei die Anzahl der Eintrittsflächen mit der Anzahl der Austrittsflächen übereinstimmt.

Die unteren Enden der Umlenkelemente definieren zusammen mit den Wandelementen, dem Bodenelement und der Behälterwand im Querschnitt betrachtet Eintrittsflächen, auf die sich der nach oben strömende Dampf aufteilt. Die Summe der Eintrittsflächen entspricht der offenen Querschnittsfläche. Analog definieren die oberen Enden der Umlenkelemente zusammen mit den Wandelementen und gegebenenfalls der oberen Begrenzung des Behälters Austrittsflächen, durch die die jeweiligen Teilströme vom Dampfraum in den Kondensationsraum strömen. Zwischen den Eintrittsflächen und den Austrittsflächen werden durch die Umlenkelemente, die Wandelemente, das Bodenelement, die Behälterwand und gegebenenfalls die obere Begrenzung des Behälters Kanäle definiert, durch die der Dampf anteilig strömt.

Bei einer weiterhin bevorzugten Vorrichtung sind die Flächeninhalte der Eintrittsflächen so gewählt, dass die Volumenströme durch die jeweiligen Eintrittsflächen nicht mehr als 10%, besonders bevorzugt nicht mehr als 5% voneinander abweichen, und wobei die Flächeninhalte der Austrittsflächen nicht mehr als 10%, besonders bevorzugt nicht mehr als 5% voneinander abweichen.

Der Flächeninhalt der horizontalen offenen Querschnittsfläche wird festgelegt durch den Behälterdurchmesser sowie die Dimensionen und Anordnung der den Kondensationsraum begrenzenden Elemente wie Wandelemente und Bodenelement. Die Flächeninhalte der einzelnen Eintrittsflächen können durch entsprechende Wahl der Anzahl der Umlenkelemente, deren Abmessungen, Anordnung und Form festgelegt werden. Analog können die einzelnen Austrittsflächen durch entsprechende Wahl der Anzahl der Umlenkelemente, deren Abmessungen, Anordnung und Form festgelegt werden.

Der Gesamtvolumenstrom des aufsteigenden Dampfes wird durch die Eintrittsflächen in Teilvolumenströme aufgeteilt, die durch die jeweiligen Kanäle strömen. Ist die Dampfströmung beim Eintritt in den Dampfraum über den Querschnitt ungleichmäßig verteilt, werden die Verhältnisse der Eintrittsflächen zueinander vorzugsweise so gewählt, dass die Teilvolumenströme um nicht mehr als die oben angegebenen Werte voneinander abweichen. In einem Bereich großer Dampfströmung wird eine kleinere Eintrittsfläche gewählt als in einem Bereich mit geringer Dampfströmung. Die Verteilung des aufsteigenden Dampfstroms über die Querschnittsfläche kann experimentell oder durch Simulation bestimmt werden, beispielsweise mit CFD-Modellen (Computational Fluid Dynamics).

Im Falle einer über den Querschnitt am Eintritt in den Dampfraum gleichmäßigen Dampfströmung sind die Teilvolumenströme proportional zu den jeweiligen Eintrittsflächen. In einem solchen Fall ist eine Vorrichtung bevorzugt, bei der die Flächeninhalte der Eintrittsflächen nicht mehr als 10%, besonders bevorzugt nicht mehr als 5% voneinander abweichen, und die Flächeninhalte der Austrittsflächen nicht mehr als 10%, besonders bevorzugt nicht mehr als 5% voneinander abweichen.

Eine Wahl der Eintrittsflächen in den bevorzugten Bereichen ermöglicht eine gleichmäßige Verteilung der Teilvolumenströme am Austritt und somit eine gleichmäßige Verteilung des zu kondensierenden Dampfes auf die Wärmetauscherelemente. Dies hat den Vorteil, dass die Wärmetauscherelemente effizient genutzt werden.

In einer vorteilhaften Ausgestaltung weisen die Umlenkelemente der erfindungsgemäßen Vorrichtung eine Rundung auf, die derart gestaltet ist, dass die Dampfströmung beim Übergang von der vertikalen Strömungsrichtung am Eintritt in den Dampfraum in die horizontale Strömungsrichtung am Austritt aus dem Dampfraum im Wesentlichen frei von Verwirbelungen oder Ablösungen ist. Besonders bevorzugt ist die Rundung in Form eines Viertelkreises oder einer Viertelellipse ausgestaltet, sodass die Dampfströmung der Form der Rundung folgt. Die konkrete Ausgestaltung der Umlenkelemente hängt auch von dem zur Verfügung stehenden Raum in dem Behälter ab. Eine Rundung ohne Ecken, Kanten oder sonstiger Hindernisse im Strömungsverlauf ist in jedem Falle bevorzugt. Die bevorzugte Gestaltung der Rundung trägt signifikant zur weiteren Verringerung des Druckverlustes bei der Umlenkung des Dampfes bei.

In einer weiteren vorteilhaften Ausgestaltung der Erfindung ist in dem Kondensationsraum in Strömungsrichtung des Dampfes gesehen hinter dem Bündel von Wärmetauscherelementen ein weiteres Bündel von Zusatzwärmetauscherelementen vorhanden. Der Dampf strömt zunächst beim Übertritt vom Dampfraum in den Kondensationsraum durch das Bündel von Wärmetauscherelementen und anschließen durch das Bündel von Zusatzwärmetauscherelementen. Mit dieser Maßnahme kann die Kühlleistung auf mindestens zwei Bündel aufgeteilt werden, was eine größere Flexibilität bei der Auslegung und Prozessführung bietet. So kann beispielsweise im ersten Bündel von Wärmetauscherelementen der Dampf teilweise kondensiert werden, indem auf der Kühlseite der Wärmetauscherelemente ein erstes Temperaturniveau eingestellt wird. In dem Bündel von Zusatzwärmetauscherelementen kann durch die Einstellung eines zweiten, niedrigeren Temperaturniveaus anschließend die vollständige Kondensation des verbliebenen Dampfes realisiert werden. Durch diese Aufteilung der benötigten Kühlleistung kann beispielsweise eine Totalkondensation erreicht werden, bei der ein Anteil des üblicherweise teureren Kühlmediums niedriger Temperatur zugunsten eines günstigeren Kühlmediums höherer Temperatur eingespart wird.

Als Wärmetauscherelemente und als Zusatzwärmetauscherelemente können sämtliche dem Fachmann bekannten Elemente eingesetzt werden, die auch bei herkömmlichen Kondensatoren Verwendung finden, beispielsweise Plattenwärmetauscher wie gedichtete Plattenwärmetauscher, voll verschweißte Plattenwärmetauscher, Thermobleche, oder Rohrbündel, wobei die Rohre glatt sein können oder zusätzliche Elemente wie Rippen aufweisen können. Abhängig von den konkreten Anforderungen an die Kondensation des Dampfes und die Gegebenheiten im Hinblick auf das zur Verfügung stehende Kühlmedium können die Wärmetauscherelemente und/oder Zusatzwärmetauscherelemente gewählt und ausgelegt werden. Das Kühlmedium kann die Wärmetauscherelemente und/oder Zusatzwärmetauscherelemente eingängig oder mehrgängig durchströmen. Bevorzugt sind die Elemente derart gestaltet, dass das Kühlmedium sie zweigängig durchströmt. Die Strömungsrichtung des Kühlmediums hängt von der Art der gewählten Wärmetauscherelemente ab. Bevorzugt ist eine im Wesentlichen vertikale Durchströmung der Wärmetauscherelemente und/oder Zusatzwärmetauscherelemente mit Kühlmedium.

In einer bevorzugten Ausführungsform der erfindungsgemäßen Vorrichtung handelt es sich bei dem Bündel von Wärmetauscherelementen und/oder dem Bündel von Zusatzwärmetauscherelementen um Rohrbündel. Weiterhin bevorzugt ist eine Ausgestaltung, bei der jeweils zwei Rohre an ihrem unteren Ende derart verbunden sind, dass sich ein Rohrbündel aus U-Rohren ergibt. Das Rohrbündel kann rohrseitig zwei- oder mehrgängig ausgeführt sein. Aufgrund der im Wesentlichen vertikalen Anordnung der Wärmetauscherbündel befindet sich bei dieser Ausführungsform sowohl der Eintritt als auch der Austritt des Kühlmediums am oberen Ende des Bündels. In einer weiteren Ausführungsform sind die Rohre derart verbunden, dass sie mehrgängig von dem Kühlmedium durchströmt werden. In einer alternativen Ausgestaltung weist das Bündel einen Schwimmkopf auf oder ist mit zwei festen Rohrböden ausgestattet.

Bei einer vorteilhaften Weiterbildung der Vorrichtung mit Zusatzwärmetauscher ist im Kondensationsraum ein zweites Bodenelement zumindest teilweise unterhalb des Bündels von Zusatzwärmetauscherelementen angeordnet, sodass an diesem Bündel entstehendes Kondensat von dem zweiten Bodenelement auffangbar ist. Das zweite Bodenelement bildet aufgrund seiner Formgebung alleine oder gemeinsam mit einem Teil der Behälterwand und/oder der Wandelemente einen zweiten Sammelraum für an dem Zusatzwärmetauschen entstehendes Kondensat. Besonders bevorzugt ist das zweite Bodenelement ausgehend von dem Ort, oberhalb dessen sich das Bündel von Zusatzwärmetauscherelementen befindet, nach unten zur Behälterwand hin geneigt. Dadurch wird eine einfache Entnahme des sich auf dem Bodenelement sammelnden Kondensats ermöglicht, z.B. durch eine Öffnung in der Behälterwand an der tiefsten Stelle des Bodenelements. Das Bodenelement kann jedoch auch anderweitig gestaltet sein, beispielsweise im Wesentlichen horizontal mit einem konischen Ablaufbereich, aus dem das gesammelte Kondensat über eine Rohrleitung entnommen werden kann. In einer weiteren bevorzugten Ausführungsform ist das Bodenelement als Doppelblech mit einer Isolierschicht ausgeführt. Die diesbezügliche Ausgestaltung kann analog der obigen Beschreibung des ersten Bodenelements erfolgen.

Bei einer weiteren vorteilhaften Weiterbildung der Vorrichtung mit Zusatzwärmetauscher ist der zweite Sammelraum vom ersten Sammelraum getrennt, und es sind mindestens zwei Abläufe zur separaten Ausleitung der Kondensate aus den beiden Sammelräumen vorhanden. Eine derartige Ausführung der erfindungsgemäßen Vorrichtung ermöglicht die Aufteilung des Kondensats in mindestens zwei Fraktionen. So können beispielsweise auf einem bestimmten Temperaturniveau am ersten Bündel von Wärmetauscherelementen Komponenten des Dampfes mit einem vergleichsweise hohen Siedepunkt durch Kondensation abgetrennt werden, während Komponenten mit vergleichsweise niedrigen Siedepunkten in der Dampfphase verbleiben. Der verbleibende Dampf kann anschließend zu dem Bündel von Zusatzwärmetauscherelementen geleitet werden und dort auf einem niedrigeren Temperaturniveau weiter oder vollständig kondensiert werden. Auf diese Weise können zwei Kondensate erhalten werden, die sich in ihrer Zusammensetzung unterscheiden.

Ein weiterer Gegenstand der Erfindung ist eine Kolonne, in der eine erfindungsgemäße Vorrichtung zur Kondensation von Dampf angeordnet ist, und die weiterhin einen oder mehrere Kühlmediumeinlässe und einen oder mehrere Kühlmediumauslässe für die Wärmetauscherelemente und gegebenenfalls Zusatzwärmetauscherelemente sowie mindestens einen Ablauf zur Ausleitung des sich im Kondensationsraum sammelnden Kondensats umfasst. Besonders bevorzugt ist die erfindungsgemäße Vorrichtung als Kopfkondensator im Kopf der Kolonne angeordnet.

In einer weiteren vorteilhaften Ausgestaltung weist der Deckel der Kolonne eine Aufnahmevorrichtung auf, an der das Bündel von Wärmetauscherelementen befestigt ist. In einer erfindungsgemäßen Ausgestaltung ist das Bündel fest mit dem Kolonnendeckel verbunden, wie dies beispielsweise in der Offenlegungsschrift DE 198 30 163 A1 beschrieben ist. In einer bevorzugten Ausführungsform ist das Bündel von Wärmetauscherelementen lösbar in der Kolonne angebracht. Sofern vorhanden ist in dieser Ausführungsform auch ein Bündel von Zusatzwärmetauscherelemente lösbar in der Kolonne angebracht. Die lösbare Anbringung kann beispielsweise über einen Stutzen im Deckel der Kolonne erfolgen. Der Stutzen kann viereckig, rund oder eine Mischform aus beidem sein. Welche Stutzenform zu bevorzugen ist, ist im Einzelfall im Hinblick auf Betriebsbedingungen wie Druck und Temperatur, sowie im Hinblick auf das gewählte Material und die erforderliche Öffnungsfläche festzulegen. Des Weiteren kann eine lösbare Anbringung dadurch realisiert werden, dass das Wärmetauscherbündel in der Kolonne verschraubt ist. Für den Ein- und Ausbau des Bündels ist es vorteilhaft, wenn das Bündel in einer Führung gelagert ist, z.B. in im Wesentlichen vertikal ausgerichteten, fest mit der Kolonne und/oder den Wandelementen verbundenen Führungselementen, beispielsweise Führungsschienen. Die Wandelemente können auch so gestaltet sein, dass Teile von ihnen als Führungselemente fungieren.

Eine lösbare Anbringung bietet den Vorteil, dass das Bündel von Wärmetauscherelementen und gegebenenfalls ein Bündel von Zusatzwärmetauscherelementen leicht aus der Kolonne entfernt und wieder eingesetzt werden können, z.B. zu Reinigungszwecken oder im Fall einer erforderlichen Reparatur der Bündel.

Bevorzugt ist weiterhin eine Ausführungsform, bei der die Aufnahmevorrichtung der Kolonne einen Doppelflansch umfasst. Über einen ersten Flansch ist das Bündel von Wärmetauscherelementen gasdicht mit der Kolonne verbunden, und über den zweiten Flansch ist die Kühlmediumseite der Wärmetauscherelemente zugänglich. Der erste Flansch ist vorzugsweise mit dem Kolonnendeckel dicht verbunden. Die Wärmetauscherelemente sind derart angebracht, dass ihre Eintritts- und Austrittsöffnungen für das Kühlmedium bei geschlossenem erstem Flansch von außen noch zugänglich sind. Sofern Zusatzwärmetauscherelemente vorhanden sind, sind diese vorzugsweise auf dieselbe Art angebracht. Über den zweiten Flansch wird der Raum der Eintritts- und Austrittsöffnungen zur Umgebung hin abgeschlossen. Diese Ausführungsform ist vorteilhaft für Anvvendungen, bei denen der Druck in der Kolonne deutlich vom Umgebungsdruck abweicht, insbesondere für Anwendungen, bei denen in der Kolonne ein Vakuum herrscht. Aufgrund der Doppelflansch-Konstruktion können die Wärmetauscherelemente auf Seiten des Kühlmediums beispielsweise inspiziert oder gereinigt werden, ohne dass die Druckverhältnisse in der Kolonne aufgegeben werden müssen.

Die erfindungsgemäße Vorrichtung zur Kondensation von Dampf sowie erfindungsgemäße Kolonnen eignen sich für vielfältige Anwendungen. Besonders vorteilhaft lassen sie sich anwenden auf Prozesse, bei denen der Minimierung des Druckverlusts eine große Bedeutung zukommt. Ein weiterer Gegenstand der Erfindung ist daher ein Verfahren zur Kondensation eines Dampfstroms mittels einer erfindungsgemäßen Vorrichtung, wobei der Absolutdruck im Dampfraum 200 mbar., besonders bevorzugt 50 mbar, insbesondere 10 mbar nicht übersteigt.

Gegenstand der Erfindung ist weiterhin ein Verfahren zur Kondensation eines Dampfstroms mittels einer erfindungsgemäßen Vorrichtung, wobei der Dampfstrom Komponenten enthält, die bei der Kondensation an den Wärmetauscherelementen Ablagerungen-bilden.-Insbesondere eine Ausführungsform der erfindungsgemäßen Vorrichtung mit lösbaren Wärmetaüscherbündeln erweist sich in diesem Fall als vorteilhaft. Ein Austausch oder der Ein- und Ausbau zu Reinigungszwecken lässt sich in diesem Fall einfach und kostengünstig bewerkstelligen..

Die erfindungsgemäße Vorrichtung zeichnet sich durch eine kompakte Bauweise aus, wobei sie Nachteile bekannter Bauformen wie Druckverlust verursachende Rohrleitungen vermeidet.'Im Vergleich zu bekannten integrierten Kondensatorkonzepten, bietet die erfindungsgemäße Vorrichtung den Vorteil eines geringeren Druckverlustes, was insbesondere-bei Anwendungen im Vakuum oder Hochvakuum positiv zum Tragen kommt. Zu dem verringerten Druckverlust trägt, insbesondere die Umlenkung des Dampfstroms von der vertikalen in eine waagerechte Richtung bei.

Der resultierende Druckverlust wird im Wesentlichen durch die freie Durchtrittsfläche zwischen Dampf- und Kondensationsraum beim Eintritt in das Bündel von Wärmetäuscherelementen bestimmt. Diese freie Durchtrittsfläche ist bei bekannten Bauarten, wie sie z.B. in den Dokumenten DE 197 12 148 C1 und DE 198 30 163 A1 beschrieben sind, durch den Kolonnenquerschnitt begrenzt. Eine Vergrößerung ist nur möglich, indem der Kolonnenquerschnitt kostspielig erweitert wird oder indem weniger Wärmetauscherelemente im vorhandenen Kolonnenquerschnitt installiert werden. Bei der erfindungsgemäßen Vorrichtung kann diese freie Durchtrittsfläche einfach und kostengünstig durch eine Verlängerung des Bündels der Wärmetauscherelemente und damit der Kolonnenlänge vergrößert werden. Im Gegensatz zu bekannten integrierten Kondensatoren ist die Länge der Wärmetauscherelemente in einem deutlich größeren Bereich wählbar, ohne dass die Effizienz der Kondensation signifikant sinkt. Auch dieser Vorteil ergibt sich aus der Aufteilung und Umlenkung des Dampfstroms durch die erfindungsgemäßen Umlenkelemente.

Die Erfindung lässt sich in unterschiedlichen Behältern realisieren. Besondere Vorteile entfaltet sie in unterschiedlichsten Kolonnen zur Trennung von Stoffsystemen, beispielsweise Kolonnen zur Destillation, Rektifikation, Reaktivdestillation, jeweils mit oder ohne vertikale Trennwand.

Anhand der Zeichnungen wird im Folgenden die Erfindung weiter erläutert, wobei die Zeichnungen als Prinzipdarstellungen zu verstehen sind. Sie stellen keine Beschränkung der Erfindung, beispielsweise im Hinblick auf konkrete Abmessungen oder Ausgestaltungsvarianten von Bauteilen dar. Es zeigen:
- Fig. 1:: Längsschnitt durch eine Kolonne mit einer erfindungsgemäßen Vorrichtung als Kopfkondensator
- Fig. 2:: Querschnitte durch den Kopfraum der Kolonne gemäß Fig. 1
- Fig. 3:: perspektivische Schnitte durch eine erfindungsgemäße Kolonne
- Fig. 4:: Längsschnitt durch einen Behälter mit einer erfindungsgemäßen Vorrichtung mit Zusatzwärmetauscher
- Fig. 5:: Querschnitt durch Behälter gemäß Fig. 4
- Fig. 6:: Längsschnitt durch eine Kolonne mit einer erfindungsgemäßen Vorrichtung als Kopfkondensator und Doppelflansch am Kolonnendeckel

### Liste der verwendeten Bezugszeichen

- 10: Dampfraum
- 11: Köndensationsraum
- 12: erster Sammelraum
- 13: zweiter Sammelraum
- 14: erstes Bodenelement
- 15: zweites Bodenelernent
- 16: erster Ablauf
- 17: zweiter Ablauf
- 18: Dampfauslass
- 20: Bündel von Wärmetauscherelementen
- 21: Bündel von Zusatzwärmetauscherelementen
- 22: Führungselemente
- 23: Halteelemente
- 24: Zulauf Kühlmedium
- 25: Ablauf Kühlmedium
- 26: erster Flansch
- 27: zweiter Flansch
- 30: Umlenkelement
- 40: Wandelement

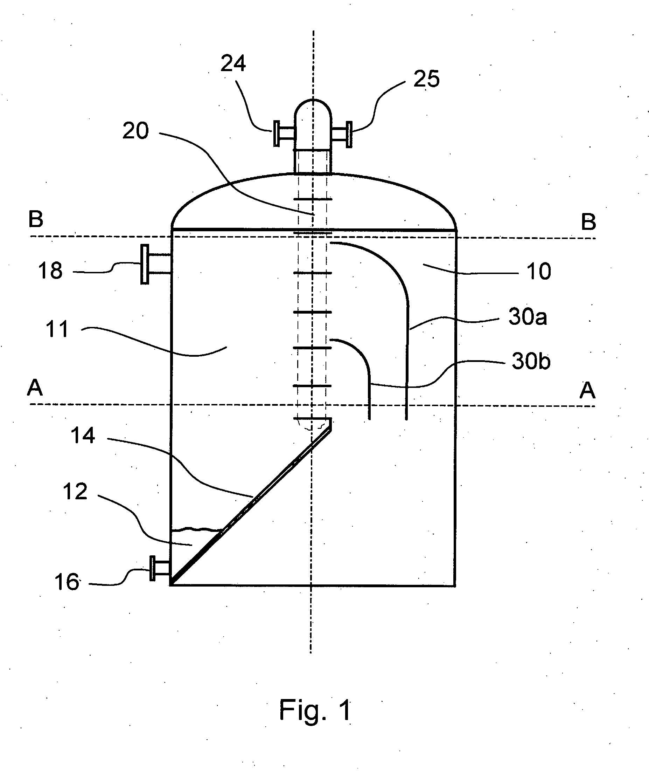

Fig. 1 zeigt einen Längsschnitt durch den oberen Teil einer Kolonne, in der eine erfindungsgemäße Vorrichtung als Kopfkondensator angebracht ist. Ein Bündel von Wärmetauscherelementen 20 ist mittig am Deckel der Kolonne befestigt und erstreckt sich vertikal nach unten. Oberhalb des Kolonnenkopfes ist ein Zulauf 24 und ein Ablauf 25 für ein Kühlmedium vorgesehen, das die Wärmetauscherelemente durchströmt. Unterhalb der Wärmetauscherelemente ist ein Bodenelement 14 angebracht, das sich von den Wärmetauscherelementen schräg nach unten bis zur Kolonnenwand erstreckt. Das Bodenelement 14 ist dichtend mit der Kolonnenwand verbunden und bildet mir ihr einen Sammelraum 12 für Kondensat, das sich am Wärmetauscherbündel bildet und in den Sammelraum 12 tropft. Am tiefsten Punkt des Bodenelements 14 ist in der Kolonnenwand ein Ablauf 16 für das gesammelte Kondensat vorgesehen.

Der Kondensationsraum 11 ist nach unten durch das Bodenelement 14 und nach oben durch den Kolonnendeckel begrenzt. Seitlich ist der Kondensationsraum 11 zum einen durch die Kolonnenwand begrenzt und zum anderen durch Wandelemente, die links und rechts zwischen dem Wärmetauscherbündel und der Kolonnenwand angeordnet sind (in Fig. 1 nicht dargestellt). Das Bodenelement 14 sowie die Wandelemente sind dichtend mit der Kolonnenwand verbunden. Im Dampfraum 10 sind zwei Umlenkelemente 30a, 30b angebracht, die den aus dem unteren Teil der Kolonne aufsteigenden Dampf in drei Teile aufteilen, und die senkrechte Strömung in eine horizontale Strömung umlenken, sodass der Dampf im Wesentlichen horizontal und damit orthogonal auf die Wärmetauscherelemente 20 trifft.

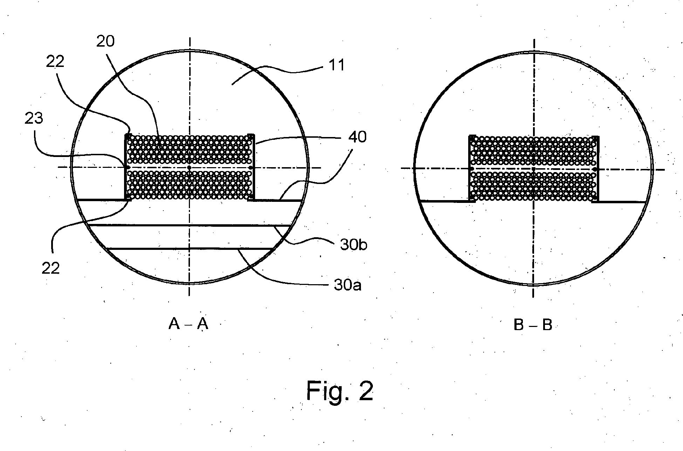

Fig. 2 zeigt zwei Querschnitte durch den in Fig. 1 dargestellten Teil der Kolonne. Die Abbildung auf der linken Seite entspricht dem in Fig. 1 mit A - A bezeichneten Querschnitt knapp oberhalb der Eintrittsfläche in den Dampfraum. Die Abbildung auf der rechten Seite entspricht dem in Fig. 1 mit B - B bezeichneten Querschnitt oberhalb des oberen Endes des Umlenkelements 30a. In dem dargestellten Beispiel handelt es sich bei dem Bündel von Wärmetauscherelementen um ein mittig in der Kolonne angeordnetes Rohrbündel 20, das sechs Reihen von U-Rohren umfasst. Das U-Rohrbündel wird in diesem Beispiel rohrseitig zweigängig durchströmt. Die Reihen sind gemäß einer bekannten 30°-Teilung jeweils um einen halben Rohrdurchmesser versetzt angeordnet, sodass der Dampf nicht frei durchströmen kann, sondern um die Wärmetauscherrohre gelenkt wird. Das Wärmetauscherbündel 20 muss nicht zwingend symmetrisch und in der Mitte der Kolonne angeordnet sein. Aus fertigungstechnischen Gründen ist es jedoch vorteilhaft, wenn die Breite und Anordnung des Bündels so gewählt ist, dass das Bündel nicht zu weit in den Krempenbereich, also den gewölbten Bereich des Kolonnendeckels hineinragt. Die konkrete Dimensionierung hängt dabei von den baulichen Gegebenheiten ab, beispielsweise der konkreten Ausgestaltung des Kolonnendeckels.

Dampfraum und Kondensationsraum 11 sind durch Wandelemente 40 voneinander getrennt. Das Wärmetauscherbündel 20 ist in Strömungsrichtung des Dampfes betrachtet direkt hinter der vertikalen Übertrittsfläche angeordnet. Weiterhin ist das Wärmetauscherbündel 20 auch seitlich von Wandelementen 40 begrenzt. Dies bewirkt, dass der vom Dampfraum in den Kondensationsraum 11 strömende Dampf direkt auf die Wärmetauscherelemente geführt wird und durch sämtliche Rohrreihen strömen muss, ohne zur Seite ausweichen zu können. Die Enden der Wandelemente 40 sind in diesem Beispiel derart geformt, dass sie als Führungselemente für das Bündel dienen. Zusätzlich bewirkt diese Formgebung, dass der Dampfstrom auf die Wärmetauscherelemente gelenkt wird und nicht als Bypass zwischen dem Bündel und den Wandelementen vorbeiströmt. In den Ecken und in der Mitte des Querschnitts durch das Bündel befinden sich stangenförmige Halteelemente 23, die in der Abbildung als schwarze Punkte angedeutet sind. Die Halteelemente 23 sind mit Halteblechen verbunden, die den gesamten Rohrbündelquerschnitt abdecken und die einzelnen Rohre in ihrer horizontalen Position fixieren.

Die Umlenkelemente 30a und 30b sorgen für eine gleichmäßige Aufteilung des Dampfes auf die Wärmetauscherelemente, in diesem Beispiel in drei separate Volumenströme.

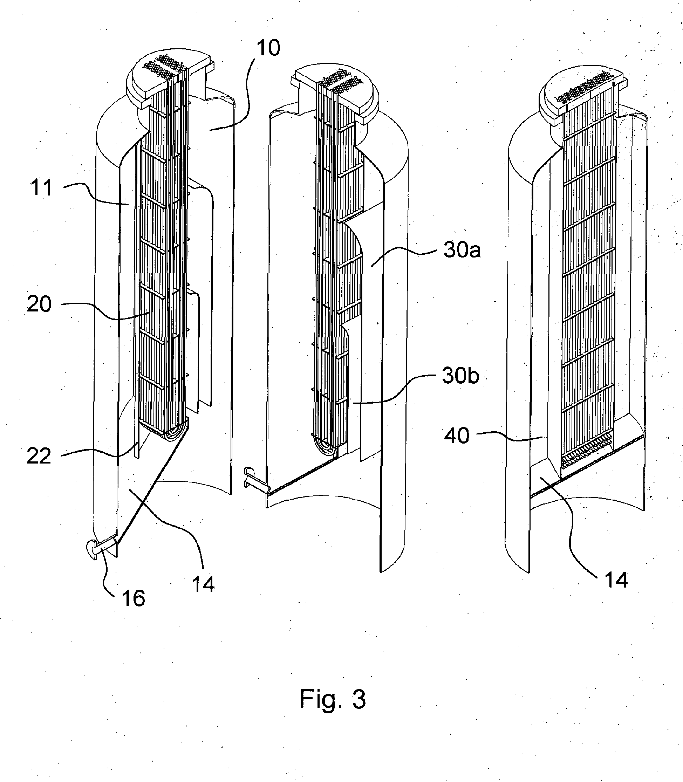

In Fig. 3 sind drei perspektivische Schnitte durch eine erfindungsgemäße Kolonne, dargestellt, die in ihren wesentlichen Bauteilen der Prinzipskizze in Fig. 1 entspricht. Die Anordnung von Bodenelement 14, Wandelementen 40, Führungselementen 22 sowie Wärmetauscherbündel 20 und Umlenkelementen 30a und 30b lässt sich aus dieser Abbildung anschaulich ersehen. Auch die Haltebleche, mit denen die einzelnen Rohre zum Bündel fixiert sind, sind in dieser Darstellung zu erkennen.

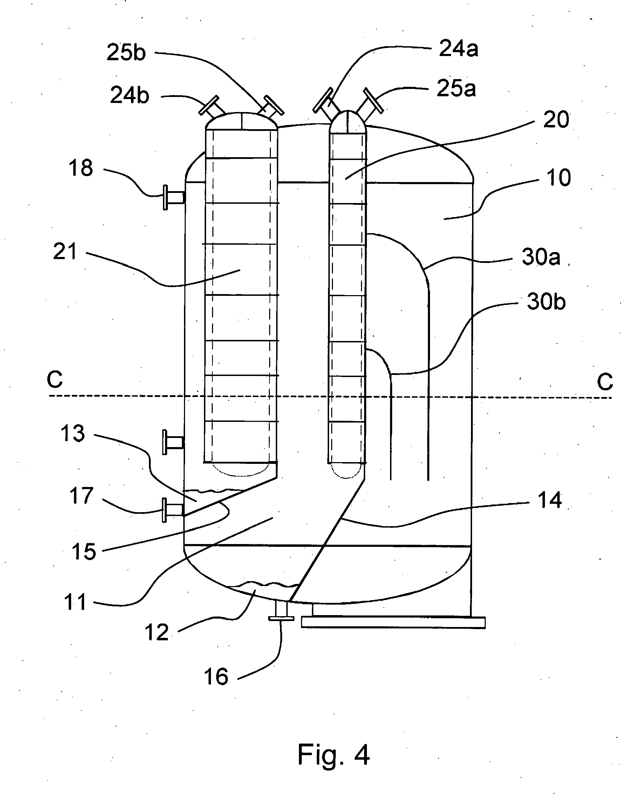

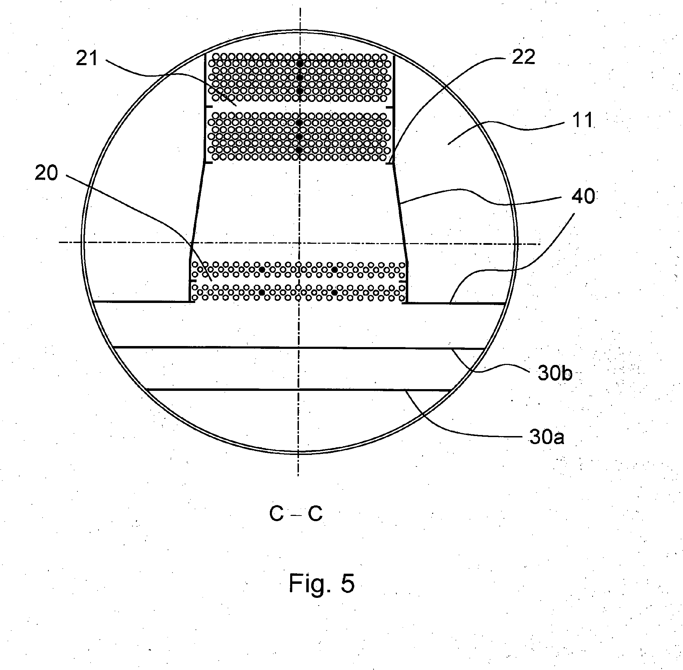

Fig. 4 zeigt einen Längsschnitt durch einen Behälter, der eine erfindungsgemäße Vorrichtung mit Zusatzwärmetauscher umfasst. Fig. 5 zeigt einen Querschnitt durch den Behälter durch die in Fig. 4 mit C - C bezeichnete Ebene. An seinem unteren Ende weist der Behälter einen Stutzen auf, durch den Dampf nach oben in den Dampfraum 10 strömen kann. Ein Bündel von Wärmetauscherelementen 20 ist senkrecht zur Zeichenebene betrachtet mittig im Behälter angebracht. Oberhalb des Behälterdeckels sind ein Zulauf 24a und ein Ablauf 25a für ein Kühlmedium vorgesehen, das die Wärmetauscherelemente durchströmt. Ein erstes Bodenelement 14 ist dichtend mit dem Boden und Teilen der Wand des Behälters sowie mit Wandelementen 40 verbunden. Die Wandelelemente 40 erstrecken sich von den Außenwänden des Behälters nach innen in Richtung des Wärmetauscherbündels 20 sowie bis zum Behälterdeckel. Die vertikale Fläche, die nicht von Wandelementen 40 bedeckt ist, definiert die vertikale Übertrittsfläche vom Dampfraum 10 in den Kondensationsraum 11.

Auch in diesem Beispiel sind im Dampfraum zwei Umlenkelemente 30a und 30b vorhanden, die von unten nach oben betrachtet zunächst im Wesentlichen senkrecht verlaufen und an ihrem oberen Ende im Längsschnitt die Form eines Viertelkreises aufweisen. Der durch den Stutzen in den Behälter strömende Dampf wird in drei Volumenströme aufgeteilt und aufgrund der Umlenkung im Wesentlichen waagerecht auf die Wärmetauscherelemente geführt. Bei dem Wärmetauscher handelt es sich um ein Rohrbündel 20, das drei Reihen von U-Rohren umfasst. In diesem Beispiel wird das Bündel rohrseitig sechsgängig durchströmt. Die Reihen sind gemäß einer bekannten 45°-Teilung gegeneinander versetzt angeordnet, sodass der Dampf nicht frei durchströmen kann, sondern um die Wärmetauscherrohre gelenkt wird.

In Strömungsrichtung des Dampfes betrachtet ist im hinteren Teil des Kondensationsraums 11 ein Bündel von Zusatzwärmetauscherelementen 21 angebracht, das ebenfalls oberhalb des Behälterdeckels einen Zulauf 24b und einen Ablauf 25b für ein Kühlmedium zur Durchströmung der Zusatzwärmetauscherelemente aufweist. Es handelt sich hierbei um ein Rohrbündel mit sieben Reihen von U-Rohren, die gemäß einer bekannten 30°-Teilung gegeneinander versetzt angeordnet sind. Das Bündel wird in diesem Beispiel rohrseitig sechsgängig durchströmt. Seitlich sind sowohl das Wärmetauscherbündel 20 als auch das Zusatzwärmetauscherbündel 21 von Wandelementen 40 eingefasst, die derart miteinander verbunden sind, dass sich ein Strömungskanal von der vertikalen Übertrittsfläche zu dem hinteren Bündel ergibt. Diese Wandelemente 40 sind dichtend mit den entsprechenden Teilen der Behälterwand und des Behälterdeckels verbunden. Dadurch wird sichergestellt, dass der Dampf effizient auf die Kühlelemente geleitet wird und nicht seitlich in Bereiche des Kondensationsraums 11 entweichen kann, in denen keine Kühlkapazität zur Verfügung steht. An den Wandelementen 40 sind Führungselemente 22 zur Führung und Fixierung der Bündel angebracht. Haltebleche fixieren die einzelnen Rohre in ihrer horizontalen Position und decken den gesamten Rohrbündelquerschnitt ab. Sie sind in Fig. 4 durch waagrechte Linien in den Wärmetauscherbündeln 20 und 21 angedeutet.

Unterhalb des Bündels von Zusatzwärmetauscherelementen 21 ist ein zweites Bodenelement 15 angebracht, das dichtend mit Teilen der Behälterwand verbunden ist. Das erste Bodenelement 14 und das zweite Bodenelement 15 sind ausgehend von den jeweiligen Wärmetauscherbündeln schräg nach unten abfallend angeordnet und bilden mit der Behälterwand und im Falle des ersten Bodenelements 14 auch mit Teilen des Behälterbodens einen ersten Sammelraum 12 und einen zweiten Sammelraum 13 für Kondensat, das von den jeweiligen Wärmetauscherelementen 20 bzw. 21 auf die Bodenelemente fließt. Dabei sind die Sammelräume 12 und 13 baulich voneinander getrennt, sodass am Wärmetauscherbündel 20 anfallendes Kondensat ausschließlich in den ersten Sammelraum 12 gelangt, während am Zusatzwärmetauscherbündel 21 anfallendes Kondensat ausschließlich im zweiten Sammelraum 13 aufgefangen wird. Zur Ausleitung des jeweiligen Kondensats ist für den ersten Sammelraum 12 ein erster Ablauf 16 im Behälterboden vorgesehen, während sich ein zweiter Ablauf 17 für den zweiten Sammelraum 13 an der tiefsten Stelle des zweiten Bodenelements 15 in der Behälterwand befindet. Im oberen Bereich des Behälters ist ein Dampfauslass 18 vorgesehen, durch den der nicht kondensierte Anteil des Dampfes,ausgeleitet werden kann.

Die Ausstattung des Behälters mit zwei Bündeln von Wärmetauscherelementen 20 und 21, die jeweils über separate Zu- und Abläufe für Kühlmedien verfügen, ermöglicht eine mehrstufige Kondensation des Dampfes, wobei die beiden Bündel mit unterschiedlichen Kühlleistungen betrieben werden können. Dadurch, dass die Kondensate in voneinander getrennten Sammelräumen aufgefangen werden, lässt sich überdies eine Trennung des Kondensats in zwei Fraktionen unterschiedlicher Zusammensetzung erreichen. So kann beispielsweise das Bündel vom Wärmetauscherelementen 20 mit einem ersten Kühlmedium auf einem vorgegebenen Temperaturniveau betrieben werden, bei dem Komponenten des Dampfes mit einem bestimmten Taupunkt kondensieren. Der nicht kondensierte Anteil des Dampfes strömt weiter zum Bündel von Zusatzwärmetauschem 21, das mit einem zweiten Kühlmedium auf einem Temperaturniveau betrieben wird, das unterhalb des Temperaturniveaus des ersten Bündels liegt. An dem Bündel 21 werden in diesem Fall weitere Komponenten aus dem Dampfgemisch kondensieren, die einen niedrigeren Taupunkt haben als diejenigen, die überwiegend am ersten Bündel 20 kondensiert sind. Sofern am Zusatzwärmetauscherbündel 21 keine Totalkondensation stattfindet, lässt sich durch den Dampfauslass 18 eine dritte Fraktion dampfförmig abziehen.

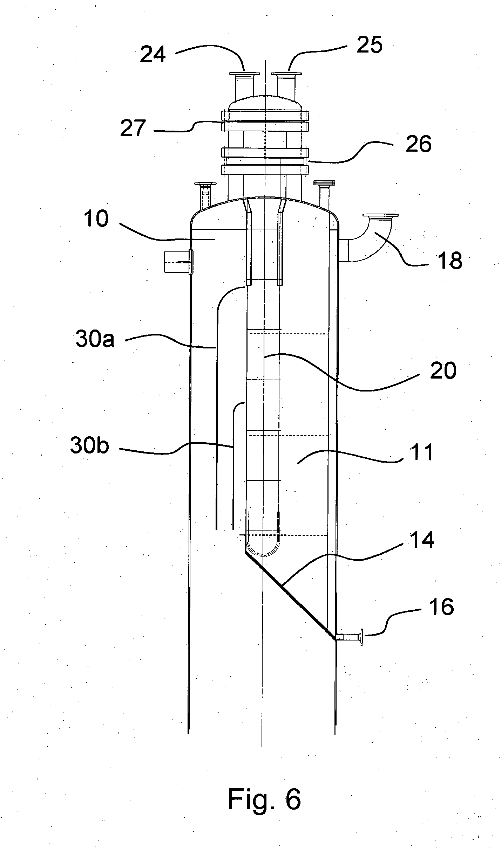

Fig. 6 stellt einen Längsschnitt durch eine Kolonne dar, die eine erfindungsgemäße Vorrichtung als Kopfkondensator aufweist. In dieser Ausführungsform ist das Bündel von Wärmetauscherelementen 20 lösbar in der Kolonne angebracht. Dazu ist am Kopf der Kolonne ein Doppelflansch als Aufnahmevorrichtung für das Wärmetauscherbündel 20 vorgesehen. Über einen ersten Flansch 26 ist das Bündel gasdicht mit der Kolonne verbunden, was bedeutet, dass aus dem Kolonneninneren durch diese Verbindung kein Dampf entweichen kann, solange dieser erste Flansch 26 geschlossen ist. Die Öffnungen der Wärmetäuscherelemente, durch die das Kühlmedium fließen kann, sind bei geschlossenem erstem Flansch 26 von außen zugäriglich. Für ihren Anschluss an den entsprechenden Zulauf 24 und Ablauf 25 des Kühlmediums ist ein zweiter Flansch 27 vorgesehen. Die Anbindung des Wärmetauscherbündels 20 über einen Doppelflansch ermöglicht es, die Innenseiten und Anschlüsse der Wärmetauscherelemente zu inspizieren und gegebenenfalls zu reinigen, ohne dabei die Kolonne öffnen zu müssen. Dies bietet insbesondere dann Vorteile, wenn die Kolonne bei einem Druck betrieben wird, der signifikant von dem Umgebungsdruck abweicht. Besonders vorteilhaft ist dies für Kolonnen, die im Vakuum oder Hochvakuum betrieben werden.

Alternativ zur Anbringung des Wärmetauscherbündels oder Zusatzwärmetauscherbündels am Deckel einer Kolonne oder eines Behälters kann auch eine Anbringung an der Seite vorgesehen sein, beispielsweise über einen Flansch, der sich in vertikaler Richtung entlang der Wand erstreckt. Eine derartige Anordnung bietet Vorteile bei der Fertigung von Kolonnen, da diese häufig liegend ausgerüstet werden. Die einzelnen Wärmetauscherelemente, beispielsweise Rohre, können horizontal oder vertikal angeordnet sein. Im Fall einer seitlichen Anbringung des Bündels über einen Flansch sind Rohrschlangen als Wärmetauscherelemente bevorzugt, die im Wesentlichen horizontal durchströmt werden. Im aufgerichteten Zustand der Kolonne ist auch in diesem Fall das Bündel von Wärmetauscherelementen im Wesentlichen vertikal ausgerichtet, da seine Ausdehnung in vertikaler Richtung größer ist als in jede horizontale Richtung.

Ein weiterer Vorteil dieser Anordnung ist darin zu sehen, dass auch der Wandbereich der Kolonne oder des Behälters mit Wärmetauscherelementen versehen werden kann, wohingegen im Falle der Einbringung über den Deckel die Deckelwölbung im Krempenbereich engere Grenzen setzt. Bei einer seitlichen Anbringung des Wärmetauscherbündels oder Zusatzwärmetauscherbündels werden auch die Zu- und Abläufe für Kühlmedien vorteilhaft an der Seite vorgesehen. Bei einer Anbringung über einen seitlichen Flansch lassen sich die Wärmetauscherbündel auch lösbar in dem Behälter oder der Kolonne befestigen.

## Patentansprüche

1. Vorrichtung zur Kondensation von Dampf in einem Behälter umfassend einen Dampfraum (10) und einen Kondensationsraum (11), die in horizontaler Richtung benachbart sind, wobei der Dampfraum (10) mit einer horizontalen offenen Querschnittsfläche nach unten offen ist, der Kondensationsraum (11) nach unten durch mindestens ein Bodenelement (14) verschlossen ist, und in dem Kondensationsraum mindestens ein Bündel von Wärmetauscherelementen (20) im Wesentlichen vertikal ausgerichtet angeordnet ist, **dadurch gekennzeichnet, dass** zwischen Dampfraum und Kondensationsraum Wandeleniente (40) vorhanden sind, die die beiden Räume teilweise voneinander trennen und eine vertikale Übertrittsfläche vom Dampfraum in den Kondensationsraum definieren, und dass im Dampfraum mindestens ein Umlenkelement (30) vorhanden ist zur Umlenkung des von unten in den Dampfraum aufsteigenden Dampfes in Richtung der Übertrittsfläche, das aufgrund seiner Formgebung eine im Wesentlichen horizontale Dampfströmung als-x-Flow durch die Übertrittsfläche auf die Wärmetauscherelemente bedingt, wobei eine Umleitung des Dampfstroms um lediglich etwa 90° erfolgt.

2. Vorrichtung nach Anspruch 1, wobei mindestens zwei Umlenkelemente (30) vorhanden sind, die die horizontale offene Querschnittsfläche beim Eintritt in den Dampfraum (10) in mindestens drei Eintrittsflächen aufteilen, und die vertikale Übertrittsfläche vom Dampfraum (10) in den Kondensationsraum (11) in mindestens drei Austrittsflächen aufteilen, wobei die Anzahl der Eintrittsflächen mit der Anzahl der Austrittsflächen übereinstimmt.

3. Vorrichtung nach Anspruch 2, wobei die Flächeninhalte der Eintrittsflächen so gewählt sind, dass die Volumenströme durch die jeweiligen Eintrittsflächen nicht mehr als 10%, bevorzugt nicht mehr als 5% voneinander abweichen, und wobei die Flächeninhalte der Austrittsflächen nicht mehr als 10%, bevorzugt nicht mehr als 5% voneinander abweichen.

4. Vorrichtung nach Anspruch 2, wobei die Flächeninhalte der Eintrittsflächen nicht mehr als 10%, bevorzugt nicht mehr als 5% voneinander abweichen, und die Flächeninhalte der Austrittsflächen nicht mehr als 10%, bevorzugt nicht mehr als 5% voneinander abweichen.

5. Vorrichtung nach einem der Ansprüche 1 bis 4, wobei die Umlenkelemente (30) eine Rundung aufweisen, die derart gestaltet ist, dass die Dampfströmung beim Übergang von der vertikalen Strömungsrichtung am Eintritt in den Dampfraum (10) in die horizontale Strömungsrichtung beim Übertritt in den Kondensationsraum (11) im Wesentlichen frei von Verwirbelungen oder Ablösungen ist.

6. Vorrichtung nach einem der Ansprüche 1 bis 5, wobei ein erstes Bodenelement (14) zumindest teilweise unterhalb des mindestens einen Bündels von Wärmetauscherelementen (20) angeordnet ist, sodass an diesem Bündel entstehendes Kondensat von dem ersten Bodenelement (14) auffangbar ist, und das aufgrund seiner Formgebung alleine oder gemeinsam mit einem Teil der Behälterwand und/oder der Wandelemente (40) einen ersten Sammelraum (12) für das Kondensat bildet.

7. Vorrichtung nach einem der Ansprüche 1 bis 6, wobei im Kondensationsraum (11) in Strömungsrichtung des Dampfes gesehen hinter dem mindestens einen Bündel von Wärmetauscherelementen (20) ein Bündel von Zusatzwärmetauscherelementen (21) vorhanden ist.

8. Vorrichtung nach Anspruch 7, wobei im Kondensationsraum (11) ein zweites Bodenelement (15) zumindest teilweise unterhalb des Bündels von Zusatzwärmetauscherelementen (21) angeordnet ist, sodass an diesem Bündel entstehendes Kondensat von dem zweiten Bodenelement (15) auffangbar ist, und das aufgrund seiner Formgebung alleine oder gemeinsam mit einem Teil der Behälterwand und/oder der Wandelemente (40) einen zweiten Sammelraum (13) für dieses Kondensat bildet.

9. Vorrichtung nach Anspruch 8, wobei der zweite Sammelraum (13) von dem ersten Sammelraum (12) getrennt ist, und mindestens zwei Abläufe (17, 18) zur separaten Ausleitung der Kondensate aus den beiden Sammelräumen (12, 13) vorhanden sind.

10. Vorrichtung nach einem der Ansprüche 1 bis 9, wobei es sich bei dem mindestens einen Bündel von Wärmetauscherelementen (20) und/oder dem Bündel von Zusatzwärmetauscherelementen (21) um Rohrbündel handelt.

11. Kolonne, bei der eine Vorrichtung gemäß einem der Ansprüche 1 bis 10 als Kopfkondensator im Kopf der Kolonne angeordnet ist, und die weiterhin einen oder mehrere Kühlmediumeinlässe (24) und einen oder mehrere Kühlmediumauslässe (25) für die Wärmetauscherelemente und gegebenenfalls Zusatzwärmetauscherelemente sowie mindestens einen Ablauf (17, 18) zur Ausleitung des sich im Kondensationsraum sammelnden Kondensats umfasst.

12. Kolonne nach Anspruch 11, wobei das mindestens eine Bündel von Wärmetauscherelementen (20) und/oder das Bündel von Zusatzwärmetauschern (21) lösbar in der Kolonne angebracht ist.

13. Kolonne nach Anspruch 11 oder 12, wobei der Deckel der Kolonne eine Aufnahmevorrichtung für das mindestens eine Bündel von Wärmetauscherelementen (20, 21) aufweist, wobei die Aufnahmevorrichtung einen Doppelflansch umfasst, bei dem über einen ersten Flansch (26) das oder die Bündel von Wärmetauscherelementen gasdicht mit der Kolonne verbunden ist oder sind, und über den zweiten Flansch (27) die Kühlmediumseite der Wärmetauscherelemente zugänglich ist.

14. Verfahren zur Kondensation eines Dampfstroms mittels einer Vorrichtung gemäß mindestens einem der Ansprüche 1 bis 10, wobei der Absolutdruck im Dampfraum (10) 200 mbar, bevorzugt 50 mbar, insbesondere 10 mbar nicht übersteigt.

## Claims

1. An apparatus for condensing vapor in a vessel, which comprises a vapor space (10) and a condensation space (11) which are adjacent to one another in the horizontal direction, where the vapor space (10) having a horizontal open cross section is open in the downward direction, the condensation space (11) is closed in the downward direction by at least one bottom element (14) and at least one essentially vertically aligned bundle of heat exchange elements (20) is arranged in the condensation space, wherein wall elements (40) are present between vapor space and condensation space and partly separate the two spaces from one another and define a vertical transition plane from the vapor space into the condensation space and at least one deflection element (30) is present in the vapor space to divert the vapor ascending from below into the vapor space in the direction of the transition plane and owing to its shape brings about an essentially horizontal flow of vapor as x-flow through the transition plane onto the heat exchange elements and a diversion of the vapor stream by merely approximately 90° takes place.

2. The apparatus according to claim 1, wherein at least two deflection elements (30) which divide the horizontal open cross section into at least three entry areas on entry into the vapor space (10) and divide the vertical transition plane from the vapor space (10) into the condensation space (11) into at least three exit areas are present, where the number of entry areas is equal to the number of exit areas.

3. The apparatus according to claim 2, wherein the geometric areas of the entry areas are selected so that the volume flows through the respective entry areas differ from one another by not more than 10%, preferably not more than 5%, and the geometric areas of the exit areas differ from one another by not more than 10%, preferably not more than 5%.

4. The apparatus according to claim 2, wherein the geometric areas of the entry areas differ from one another by not more than 10%, preferably not more than 5%, and the geometric areas of the exit areas differ from one another by not more than 10%, preferably not more than 5%.

5. The apparatus according to any of claims 1 to 4, wherein the deflection elements (30) have a rounding such that the vapor flow at the transition from the vertical flow direction on entry into the vapor space (10) to the horizontal flow direction on entry into the condensation space (11) is essentially free of turbulence or eddies.

6. The apparatus according to any of claims 1 to 5, wherein a first bottom element (14) is arranged at least partly below the at least one bundle of heat exchange elements (20) so that condensate formed on this bundle can be collected by the first bottom element (14) and owing to its shape either alone or together with part of the vessel wall and/or the wall elements (40) forms a first collection space (12) for the condensate.

7. The apparatus according to any of claims 1 to 6, wherein a bundle of additional heat exchange elements (21) is present downstream, in the flow direction of the vapor, of the at least one bundle of heat exchange elements (20) in the condensation space (11).

8. The apparatus according to claim 7, wherein a second bottom element (15) is arranged in the condensation space (11) at least partly below the bundle of additional heat exchange elements (21) so that condensate formed on this bundle can be collected by the second bottom element (15) and, owing to its shape, either alone or together with part of the vessel wall and/or the wall elements (40) forms a second collection space (13) for this condensate.

9. The apparatus according to claim 8, wherein the second collection space (13) is separate from the first collection space (12) and at least two outlets (17, 18) for separate discharge of the condensates from the two collection spaces (12, 13) are present.

10. The apparatus according to any of claims 1 to 9, the at least one bundle of heat exchange elements (20) and/or the bundle of additional heat exchange elements (21) are bundles of tubes.

11. A column in which an apparatus according to any of claims 1 to 10 is arranged as overhead condenser in the top region of the column and which further comprises one or more cooling medium inlets (24) and one or more cooling medium outlets (25) for the heat exchange elements and optionally additional heat exchange elements and also at least one outlet (17, 18) for discharging the condensate collecting in the condensation space.

12. The column according to claim 11, wherein the at least one bundle of heat exchange elements (20) and/or the bundle of additional heat exchangers (21) is installed in a removable manner in the column.

13. The column according to claim 11 or 12, wherein the lid of the column has an accommodation device for the at least one bundle of heat exchange elements (20, 21), where the accommodation device comprises a double flange in which the bundle or bundles of heat exchange elements is/are joined in a gastight manner by a first flange (26) to the column and the cooling medium side of the heat exchange elements is accessible via the second flange (27).

14. A method of condensing a vapor stream by means of an apparatus according to at least one of claims 1 to 10, wherein the absolute pressure in the vapor space (10) does not exceed 200 mbar, preferably 50 mbar, in particular 10 mbar.

## Revendications

1. Dispositif de condensation de vapeur dans un récipient comprenant une chambre de vapeur (10) et une chambre de condensation (11), qui sont voisines en direction horizontale, dans lequel la chambre de vapeur (10) est ouverte vers le bas avec une face de section transversale ouverte horizontale, la chambre de condensation (11) est fermée vers le bas par au moins un élément de fond (14), et il se trouve dans la chambre de condensation au moins un faisceau d'éléments d'échangeur de chaleur (20) orientés essentiellement à la verticale, **caractérisé en ce qu'**il se trouve entre la chambre de vapeur et la chambre de condensation des éléments de paroi (40), qui séparent partiellement les deux chambres l'une de l'autre et définissent une face de passage de la chambre de vapeur à la chambre de condensation, et **en ce qu'**il se trouve dans la chambre de vapeur au moins un élément de déviation (30) pour la déviation de la vapeur montant du bas dans la chambre de vapeur en direction de la face de passage, lequel produit, en raison de sa forme, un écoulement de vapeur essentiellement horizontal comme flux x à travers la face de passage sur les éléments d'échangeur de chaleur, dans lequel il ne se produit qu'une déviation du courant de vapeur d'environ 90°.

2. Dispositif selon la revendication 1, dans lequel il se trouve au moins deux éléments de déviation (30), qui divisent la face de section transversale ouverte horizontale à l'entrée dans la chambre de vapeur (10) en au moins trois faces d'entrée, et qui divisent la face de passage verticale de la chambre de vapeur (10) à la chambre de condensation (11) en au moins trois faces de sortie, dans lequel le nombre des faces d'entrée coïncide avec le nombre des faces de sortie.

3. Dispositif selon la revendication 2, dans lequel les contenus superficiels des faces d'entrée sont choisis de telle manière que les courants volumiques à travers les faces d'entrée respectives ne s'écartent pas l'un de l'autre de plus de 10 %, de préférence de plus de 5 %, et dans lequel les contenus superficiels des faces de sortie ne s'écartent pas l'un de l'autre de plus de 10 %, de préférence de plus de 5 %.

4. Dispositif selon la revendication 2, dans lequel les contenus superficiels des faces d'entrée ne s'écartent pas l'un de l'autre de plus de 10 %, de préférence de plus de 5 %, et les contenus superficiels des faces de sortie ne s'écartent pas l'un de l'autre de plus de 10 %, de préférence de plus de 5 %.

5. Dispositif selon l'une quelconque des revendications 1 à 4, dans lequel les éléments de déviation (30) présentent un arrondi, qui est configuré de telle manière que l'écoulement de vapeur lors de la transition de la direction d'écoulement verticale à l'entrée dans la chambre de vapeur (10) à la direction d'écoulement horizontale lors du passage dans la chambre de condensation (11), soit essentiellement libre de turbulences ou de décollements.

6. Dispositif selon l'une quelconque des revendications 1 à 5, dans lequel un premier élément de fond (14) est disposé au moins partiellement en dessous dudit au moins un faisceau d'éléments d'échangeur de chaleur (20), de telle manière que le condensat apparaissant à ce faisceau puisse être recueilli par le premier élément de fond (14), et il forme en raison de sa forme, seul ou en commun avec une partie de la paroi de récipient et/ou des éléments de paroi (40), une première chambre de collecte (12) pour le condensat.

7. Dispositif selon l'une quelconque des revendications 1 à 6, dans lequel il se trouve dans la chambre de condensation (11), vu dans la direction d'écoulement de la vapeur, un faisceau d'éléments d'échangeur de chaleur additionnels (21) après ledit au moins un faisceau d'éléments d'échangeur de chaleur (20).

8. Dispositif selon la revendication 7, dans lequel un deuxième élément de fond (15) est disposé dans la chambre de condensation (11) au moins partiellement en dessous du faisceau d'éléments d'échangeur de chaleur additionnels (21), de telle manière que le condensat apparaissant à ce faisceau puisse être recueilli par le deuxième élément de fond (15), et il forme en raison de sa forme, seul ou en commun avec une partie de la paroi de récipient et/ou des éléments de paroi (40), une deuxième chambre de collecte (13) pour ce condensat.

9. Dispositif selon la revendication 8, dans lequel la deuxième chambre de collecte (13) est séparée de la première chambre de collecte (12), et il se trouve au moins deux sorties (17, 18) pour l'évacuation séparée des condensats hors des deux chambres de collecte (12, 13).

10. Dispositif selon l'une quelconque des revendications 1 à 9, dans lequel ledit au moins un faisceau d'éléments d'échangeur de chaleur (20) et/ou le faisceau d'éléments d'échangeur de chaleur additionnels (21) sont des faisceaux de tubes.

11. Colonne, dans laquelle un dispositif selon l'une quelconque des revendications 1 à 10 est disposé dans la tête de colonne comme condenseur de tête, et qui comporte en outre une ou plusieurs entrées de fluide de refroidissement (24) et une ou plusieurs sorties de fluide de refroidissement (25) pour les éléments d'échangeur de chaleur et éventuellement les éléments d'échangeur de chaleur additionnels ainsi qu'au moins une sortie (17, 18) pour l'évacuation du condensat collecté dans la chambre de condensation.

12. Colonne selon la revendication 11, dans laquelle ledit au moins un faisceau d'éléments d'échangeur de chaleur (20) et/ou le faisceau d'éléments d'échangeur de chaleur additionnels (21) est/sont installé(s) de façon amovible dans la colonne.

13. Colonne selon la revendication 11 ou 12, dans laquelle le couvercle de la colonne présente un dispositif de réception pour ledit au moins un faisceau d'éléments d'échangeur de chaleur (20, 21), dans laquelle le dispositif de réception comprend une double bride, dans laquelle le ou les faisceau(x) d'éléments d'échangeur de chaleur est ou sont assemblé(s) à la colonne de façon étanche au gaz au moyen d'une première bride (28) et le côté du fluide de refroidissement des éléments d'échangeur de chaleur est accessible par la deuxième bride (27).

14. Procédé de condensation d'un courant de vapeur au moyen d'un dispositif selon au moins une des revendications 1 à 10, dans lequel la pression absolue dans la chambre de vapeur (10) ne dépasse pas 200 mbar, de préférence 50 mbar, en particulier 10 mbar.
